# DEMANDE DE BREVET EUROPEEN

(11) **EP 1 615 179 A1**
(43) Date de publication de la demande: **11.01.2006**
(21) Numéro de dépôt: 05291404.1
(22) Date de dépôt: 29.06.2005
(51) Int. Cl.: G07C 5/08

(54) **Système de configuration d'un calculateur embarqué à bord d'un véhicule automobile**

(30) Priorité: 07.07.2004 FR 0407552
(71) Demandeur: Peugeot Citroen Automobiles S.A., 78140 Vélizy Villacoublay (FR)
(72) Inventeur: Lopez, Thierry, 78700 Conflans-Sainte-Honorine (FR)
(74) Mandataire: Habasque, Etienne J. Jean-François

(57) **Abrégé**

L'invention concerne un système de configuration d'un calculateur (2) embarqué à bord d'un véhicule automobile, associé à des moyens (14, 15) de stockage d'une table de transcodage et de données de calibration du calculateur. Ce système est caractérisé en ce qu'il comporte des moyens extérieurs au véhicule, d'écriture d'un numéro d'identification du véhicule (VIN) dans une zone (13) de stockage de données du calculateur (2) et en ce que le calculateur comporte des moyens (16) de lecture et d'analyse d'au moins une partie de ce numéro d'identification (VIN) pour récupérer à travers la table de correspondance (14) les données de calibration correspondantes (15).

## Description

La présente invention concerne un système de configuration d'un calculateur embarqué à bord d'un véhicule automobile.

Plus particulièrement, l'invention se rapporte à un système de configuration d'un tel calculateur associé à des moyens de stockage d'une table de transcodage et de données de calibration de ce calculateur.

Il existe déjà depuis quelque temps, des règles relatives au diagnostic automobile et en particulier, au diagnostic embarqué, également connu sous le nom de EOBD (European On-Board Diagnosis, Diagnostic Embarqué Européen).

Sous cette appellation, s'est instituée pour les constructeurs automobiles désirant commercialiser des véhicules au sein de la Communauté Economique Européenne, l'obligation de satisfaire la directive 98/69/CE datée du 13 octobre 1998 modifiant la directive 70/220/CEE relative aux mesures à prendre contre la pollution de l'air par les véhicules à moteurs.

Ce texte complété ensuite par la directive 1999/102/CE de la Commission Européenne, du 15 décembre 1999 est parue au JO du 28 décembre 1999, afin de proposer des normes applicables dès l'an 2000 aux véhicules particuliers, aux véhicules utilitaires légers et aux poids lourds, selon une nouvelle approche multidirectionnelle fondée sur une évaluation complète des aspects coût / efficacité de toutes les mesures visant à réduire la pollution provoquée par les transports routiers.

Cette proposition comprend, outre un resserrement des normes d'émission, des mesures complémentaires telles que l'amélioration des carburants et le renforcement du programme d'inspection et d'entretien du parc automobile.

Le renforcement de ce programme d'inspection a conduit :
1. d'une part, à introduire un système de diagnostic embarqué à bord des véhicules, permettant la détection immédiate de tout dysfonctionnement de l'équipement anti-pollution des véhicules, ainsi que le maintien du niveau initial des émissions polluantes au moyen d'inspections périodiques ou en bord de route. Ce système de diagnostic embarqué pour le contrôle des émissions doit être capable de déceler l'origine probable d'un dysfonctionnement au moyen de codes d'erreur stockés dans la mémoire d'un calculateur, et
2. d'autre part, de s'assurer lors du contrôle technique de la conformité de ce véhicule par rapport à la définition homologuée. Cette vérification concerne le logiciel et les calibrations du ou des calculateurs participant à la fonction et permettant de garantir que le propriétaire n'en a pas modifié le contenu afin d'en augmenter la puissance, ce phénomène étant connu par exemple sous l'appellation « chiptuning », et par voie de conséquence, à rejeter davantage d'émissions polluantes.

Ce contrôle est réalisé depuis un outil standard multiconstructeur portant l'appellation de « Scan Tool » connecté sur la prise de diagnostic centralisée du véhicule afin de récupérer diverses informations parmi lesquelles :
1. Les défauts éventuellement détectés et stockés par le système de surveillance ;
2. Les valeurs en dynamique des grandeurs acquises par les capteurs ;
3. Des informations permettrant de vérifier le logiciel des calculateurs, telles que :
   - le CAL-ID référence du logiciel qui évolue à chaque fois que l'on modifie une fonction incluse dans le périmètre EOBD, et
   - le CVN (Check Verification Number), qui est une checksum sur le contenu effectif de la mémoire du calculateur. Cette checksum est recalculée et stockée lors de chaque roulage afin de pouvoir être transmise sur interrogation de l'outil.

Un aspect important de cette réglementation consiste à garantir pour le constructeur que l'utilisateur c'est-à-dire le client final, ne peut pas inhiber en totalité ou en partie le système de surveillance du diagnostic EOBD conduisant à l'allumage d'un voyant de type indicateur de fonctionnement défectueux MIL et/ou au stockage d'un code de défaut identifiant la défaillance détectée par le système.

Ce dernier problème est d'autant plus difficile à résoudre, qu'un constructeur généraliste fabrique en général une gamme de véhicules extrêmement diversifiée mais avec des organes transgammes (par exemple : un calculateur de contrôle moteur identique pour la même motorisation montée sur différents véhicules, ou un calculateur central habitacle (BSI transgammes) monté sur l'ensemble des véhicules du constructeur) et utilise des logiciels dits « enveloppes » à paramétrer en fonction de la déclinaison véhicule souhaitée.

Ce paramétrage s'effectue en ligne de montage comme en après-vente :
- soit par du téléchargement du code (transfert du logiciel applicatif et/ou de la calibration),
- soit par du télécodage (transmission d'une valeur permettant la sélection d'une table de calibration embarquée).

Ces deux possibilités présentent chacune des avantages et des inconvénients et sont utilisées aujourd'hui dans le cadre de la fabrication de véhicules (parfois conjointement pour trouver le meilleur compromis) .

Le téléchargement permet de répondre aux exigences de la réglementation car disposant d'un mécanisme de protection de l'accès au code dont l'une des clés se trouve dans le fichier à transférer. Cependant, le coût de figeage d'un fichier (plusieurs kEuros) est important au regard du nombre à produire compte-tenu de la diversité des véhicules fabriqués (par exemple : avec / sans boîte de vitesse automatique, avec / sans climatisation, avec / sans ABS, avec / sans ESP, avec telle ou telle classe d'alternateur etc...).

En effet, si l'on ne devait utiliser que cette première possibilité, le nombre de fichiers à produire serait proche de la combinatoire des différentes options.

Le télécodage permet de réduire le nombre de fichiers à réaliser puisque l'on peut par exemple réaliser un logiciel unique fonctionnant avec / sans ABS et simplement transmettre au calculateur dans l'environnement de production, l'information ABS présent au travers d'une valeur (paramètre) issue des systèmes de fabrication (DOTEs) comprise et interprétée par le logiciel.

Cependant cette fonctionnalité va à l'encontre des exigences de la réglementation et ne peut donc pas être utilisée dans le cadre d'options impactant le niveau d'émissions polluantes comme la boîte de vitesse, la silhouette véhicule, la motorisation etc..., car il reste possible simplement depuis un outil, de changer la configuration initiale réalisée par le constructeur en modifiant ainsi les conditions de surveillance du diagnostic EOBD.

De plus, la difficulté au niveau après-vente de retrouver (trouver) les bonnes données à transmettre en fonction du véhicule (pas de traçabilité des changements de calculateurs) conduit à limiter fortement le nombre de ces paramètres de télécodage.

En effet, l'opérateur doit souvent reconstituer une trame « manuellement » correspondant au format des paramètres à transmettre au calculateur lors du remplacement de celui-ci si la nouvelle pièce est compatible mais pas identique à l'originale montée sur le véhicule lors de la sortie d'usine de fabrication. Dans le domaine électronique, il est tout à fait possible que ces deux calculateurs remplissent les mêmes fonctions sous réserve d'un paramétrage du logiciel de la pièce la plus récente.

Le but de l'invention est donc de résoudre ces problèmes.

A cet effet l'invention a pour objet un système de configuration d'un calculateur embarqué à bord d'un véhicule automobile, associé à des moyens de stockage d'une table de transcodage et de données de calibration du calculateur, caractérisé en ce qu'il comporte des moyens extérieurs au véhicule, d'écriture d'un numéro d'identification du véhicule dans une zone de stockage de données du calculateur et en ce que le calculateur comporte des moyens de lecture et d'analyse d'au moins une partie de ce numéro d'identification pour récupérer à travers la table de correspondance, les données de calibration correspondantes.

Suivant des modes particuliers de réalisation, le système comporte une ou plusieurs des caractéristiques suivantes :
- les moyens d'écriture comprennent des moyens de verrouillage d'écriture après qu'un numéro d'identification valide a été écrit dans la zone de stockage ;
- les moyens d'écriture comprennent un premier outil d'émission du numéro d'identification vers la zone de stockage du calculateur pour écrire celui-ci dans cette zone et un second outil de relecture et de contrôle de la validité de ce numéro d'identification écrit dans cette zone du calculateur pour émettre un ordre de verrouillage d'écriture dans cette zone de stockage ;
- il comporte des moyens d'allumage d'un voyant de défaut si un numéro d'identification n'est pas inscrit en mémoire et verrouillé.

L'invention sera mieux comprise à l'aide de la description qui va suivre donnée uniquement à titre d'exemple et faite en se référant aux dessins annexés sur lesquels :
- la figure 1 représente un exemple de numéro d'identification de véhicule VIN,
- les figures 2, 3 et 4 illustrent les différentes étapes d'écriture et de contrôle mises en oeuvre dans un système de configuration selon l'invention ; et
- la figure 5 illustre la configuration mise en oeuvre.

Le système selon l'invention se propose d'apporter une solution aux problèmes exposés précédemment en permettant à la fois de satisfaire l'exigence réglementaire de ne pas pouvoir modifier la configuration de sortie d'usine du véhicule et de réduire le nombre de fichiers à produire pour réaliser l'ensemble des déclinaisons véhicules à produire.

Le principe mis en oeuvre consiste à utiliser le numéro d'identification du véhicule VIN (Vehicle Identification Number) dont dispose tout véhicule produit, pour adapter une partie du logiciel de façon automatique.

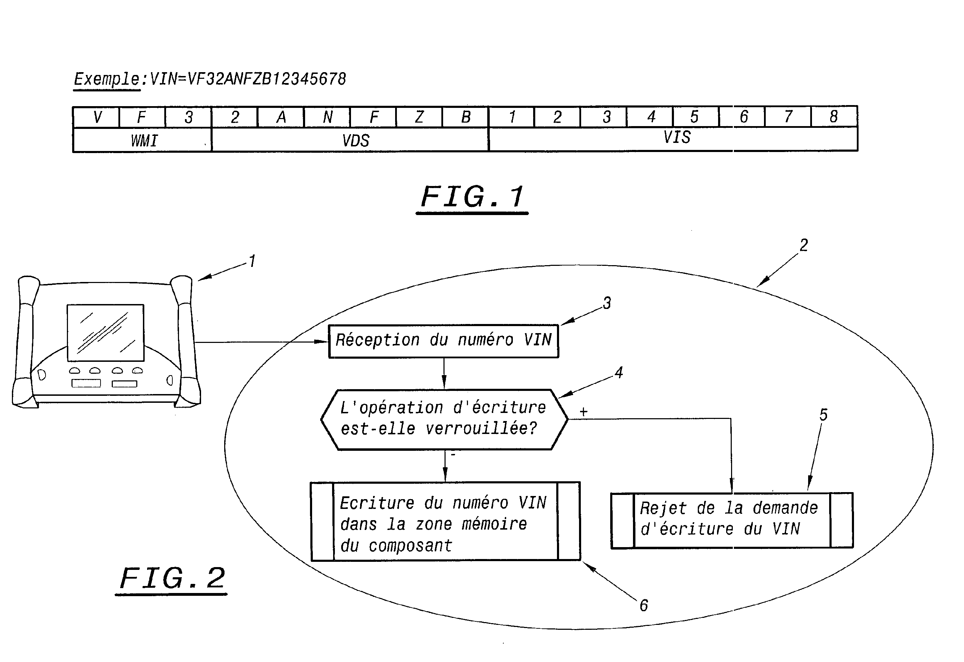

Le VIN dont un exemple est illustré sur la figure 1, est un code alphanumérique international inscrit sur différents endroits du véhicule ainsi que sur la carte grise et correspondant à son identification précise. Ce numéro comporte trois champs pour 17 caractères au total. Ce numéro est aussi celui qui est utilisé par les assureurs pour déterminer le barème des cotisations.

Les trois champs de ce numéro sont :
Le WMI pour World Manufacturer Identifier permet d'identifier la marque de la voiture ;
Le VDS pour Vehicle Description Number désigne le modèle de la voiture ; et
Le VIS pour Vehicle Identification Section représente le numéro de la voiture.

Dans le système proposé, seuls les deux premiers champs (WMI et VDS) vont être utilisés. Il convient donc de les détailler davantage pour comprendre les informations correspondantes.

Le champ WMI :
Le premier caractère (V dans l'exemple) désigne le continent (V correspond au continent Européen).
Le deuxième indique le pays (F représente la France).
Enfin, le troisième caractère indique la marque du véhicule (3 pour la marque Peugeot).
Le champ VDS :
   Le premier caractère (2 dans l'exemple) donne la ligne produit, le 2 de l'exemple signifiant véhicule 206.
   Le deuxième caractère indique la silhouette véhicule, c'est-à-dire berline 3p, berline 5p, coupé-cabriolet, SW, etc... (le A de l'exemple signifiant berline 5 portes).
   Les trois caractères suivants (NFZ dans l'exemple) désignent le moteur du véhicule (NFZ correspondant à moteur TU5JP soit le moteur essence de 1,6 litre de cylindrée de 90 ch).
   Le sixième et dernier caractère renseigne sur le type de boîte de vitesse utilisée (manuelle ou automatique) ainsi que la dépollution technique du moteur (norme Euro III, incitation fiscale IFL4, Euro IV, etc...).

Il convient alors d'écrire ce code de manière électronique (17 octets contenant les codes ASCII des caractères) dans le ou chacun des calculateurs qui doivent paramétrer leur logiciel en fonction des autres organes du véhicule.

Dans les véhicules de la demanderesse, le VIN peut être transféré :
- dans le calculateur BSI (Boîtier de Servitude Electronique) qui est le calculateur central habitacle du véhicule,
- dans le calculateur CMM (Calculateur Multifonctions Moteur), ou
- dans le calculateur BVA (Boîte de Vitesse Automatique) par exemple.

Le transfert est effectué par exemple à l'aide d'un premier outil de diagnostic en bord de ligne déjà largement utilisé dans les usines terminales pour télécharger ou télécoder les calculateurs des véhicules. On peut notamment s'appuyer sur l'un des deux protocoles suivants, en vigueur pour transmettre ce numéro VIN :
- IS014230 spécifiant la communication au moyen d'une ligne de communication bidirectionnelle série K.
- IS015765 spécifiant la communication au travers d'un réseau CAN.

Pour satisfaire l'exigence de la réglementation qui consiste à ce qu'aucun utilisateur ne puisse modifier le contenu du paramétrage du logiciel, il faut donc utiliser un mécanisme d'écriture unique et non altérable de ce VIN dans les calculateurs (on ne doit pas pouvoir écrire un autre numéro en lieu et place de celui-ci).

Ce mécanisme va se concrétiser en plusieurs étapes :
Etape 1 : se faire livrer des calculateurs dont l'écriture de la zone devant contenir le VIN, n'est pas « verrouillée » ;
Etape 2 : transmission depuis le premier outil de diagnostic du numéro VIN affecté par le système d'ordonnancement de la production au(x) calculateur(s) ;
Etape 3 : relecture du/des VIN stockés dans la mémoire du/des calculateurs depuis un second outil de contrôle de bord de ligne ; et
Etape 4 : transmission d'un ordre de verrouillage depuis l'outil après contrôle de la cohérence entre le/les numéro(s) transmis et lus.

Pour satisfaire ce processus de montage, les calculateurs devant accueillir le VIN doivent embarquer dans leur logiciel, les fonctions illustrées sur les figures 2, 3 et 4.

On reconnaît en effet sur la figure 2, un premier outil qui est désigné par la référence générale 1 et un calculateur qui est désigné par la référence générale 2, dans lequel il convient de charger le numéro VIN. Celui-ci est alors émis par le premier outil 1 et reçu par exemple en 3 dans le calculateur.

Le calculateur vérifie alors si une opération d'écriture de ce numéro VIN est verrouillée ou non en 4.

Si c'est le cas, le calculateur rejette en 5, la demande d'écriture de ce VIN, tandis que si ce n'est pas le cas, le calculateur écrit dans une zone de stockage du calculateur lors de l'opération 6, le numéro VIN.

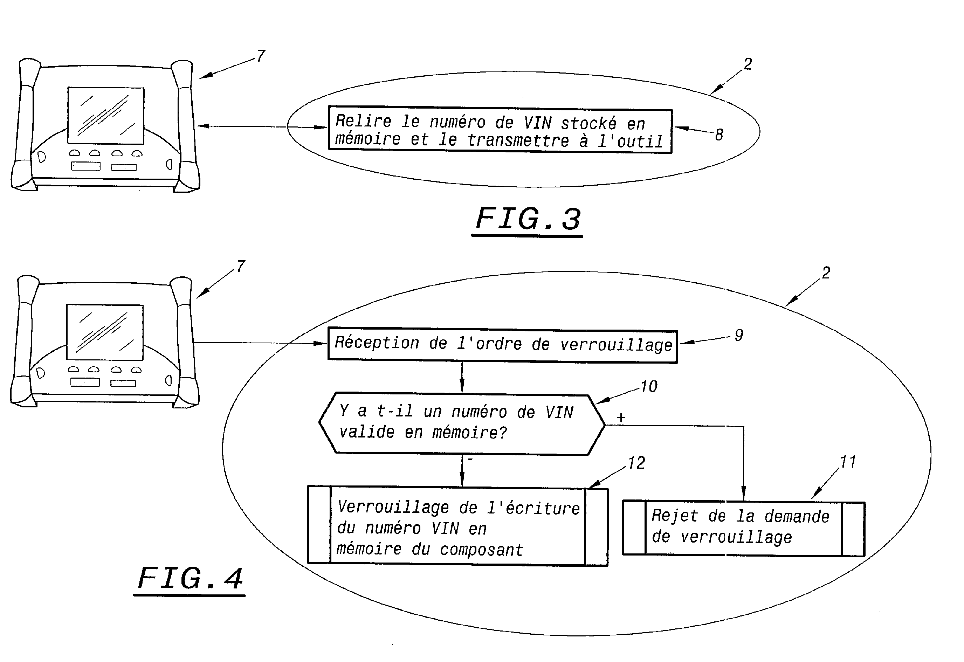

Sur la figure 3, un second outil désigné par la référence générale 7 est raccordé au calculateur 2 pour relire lors de l'étape 8, le numéro VIN stocké en mémoire et le récupérer.

Le second outil 7 vérifie alors la cohérence des informations pour, si c'est le cas comme cela est illustré sur la figure 4, émettre à destination du calculateur 2, un ordre de verrouillage qui est reçu lors de l'étape 9.

A la suite de la réception de cet ordre de verrouillage, le calculateur vérifie en 10 s'il y a bien un numéro VIN valide en mémoire. Si ce n'est pas le cas, en 11, la demande de verrouillage est rejetée tandis que si le numéro VIN en mémoire est valide, le verrouillage est autorisé en 12.

Une fois le numéro VIN écrit et l'écriture verrouillée, lors d'une initialisation du calculateur, c'est-à-dire une mise sous tension de celui-ci, son logiciel applicatif lit le contenu de la zone de stockage du VIN et en déduit en fonction de la table de transcodage embarquée dans sa mémoire, la calibration à sélectionner pour fonctionner avec le véhicule, la motorisation, la boîte de vitesse montée, etc.

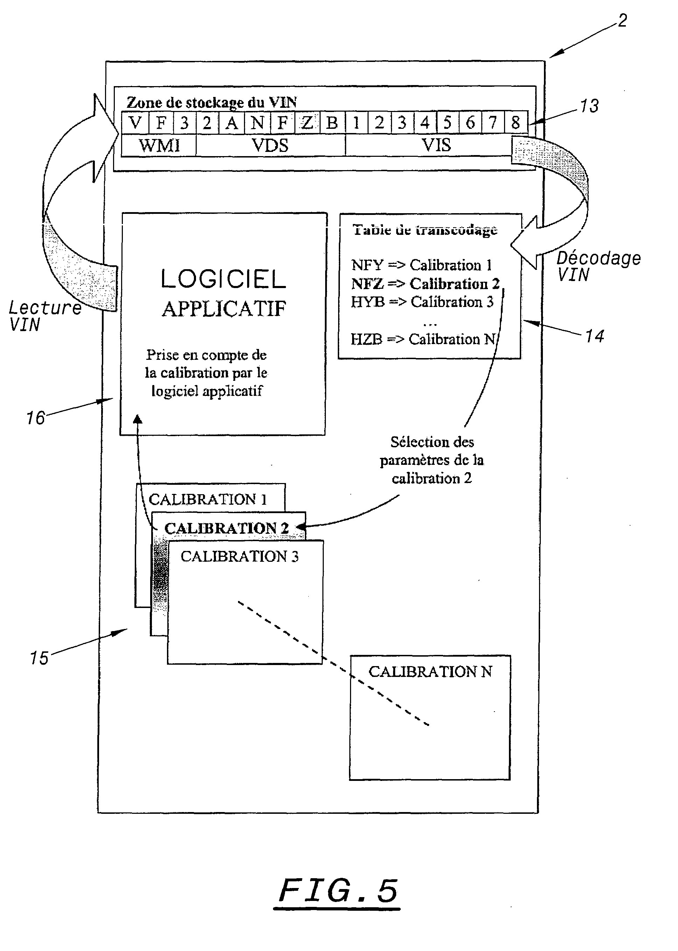

Ceci est illustré sur la figure 5, où l'on reconnaît le calculateur 2, la zone de stockage du VIN désignée par la référence générale 13, les moyens de stockage de la table de transcodage 14, les moyens de stockage des calibrations possibles 15 et le logiciel applicatif désigné par la référence générale 16.

Dans l'exemple, ce logiciel applicatif vient lire par exemple dans le champ VDS, les valeurs NFZ pour, à partir de la table de transcodage 14, sélectionner la calibration n°2 et permettre de choisir celle-ci et les paramètres correspondants parmi les différentes calibrations possibles. Bien entendu la table de transcodage est propre à chaque calculateur et fonction du jeu de calibration embarqué en mémoire.

Il n'est par exemple pas nécessaire d'embarquer dans un calculateur de contrôle moteur le décodage depuis le VIN de toutes les silhouettes possibles de véhicule, s'il n'existe pas de calibrations différentes entre les versions par exemple trois portes et cinq portes d'un véhicule donné.

Lors du remplacement d'un calculateur défectueux, par exemple dans le réseau de service après-vente, l'un des avantages du système selon l'invention est que l'opérateur n'a pas de données à récupérer depuis une base de données quelconque mais simplement à écrire le code VIN du véhicule qui est par exemple gravé sur le châssis ou le pare-brise du véhicule ou encore imprimé sur la carte grise de celui-ci, dans le calculateur.

Dans ce cadre et afin de s'assurer que l'opérateur ne peut pas oublier cette opération d'écriture du VIN dans le nouveau calculateur lors d'un remplacement d'un calculateur défectueux, une fonction supplémentaire intégrée peut être prévue pour permettre d'allumer par défaut le témoin lumineux MIL (pour Malfunction Indicator Lamp symbole ISO2575) disponible sur l'ensemble des combinés des véhicules, lorsque le VIN n'est pas verrouillé.

Une fois ce numéro inscrit en mémoire et après contrôle, le logiciel du calculateur éteint alors ce voyant MIL automatiquement lorsque l'opération a été verrouillée c'est-à-dire qu'il n'est plus possible d'écrire de VIN.

Bien entendu d'autres modes de réalisation encore peuvent être envisagés.

## Revendications

1. Système de configuration d'un calculateur (2) embarqué à bord d'un véhicule automobile, associé à des moyens (14, 15) de stockage d'une table de transcodage et de données de calibration du calculateur, **caractérisé en ce qu'**il comporte des moyens (1, 2) extérieurs au véhicule, d'écriture d'un numéro d'identification du véhicule (VIN) dans une zone (13) de stockage de données du calculateur (2) et **en ce que** le calculateur (2) comporte des moyens (16) de lecture et d'analyse d'au moins une partie de ce numéro d'identification (VIN) pour récupérer à travers la table de correspondance (14), les données de calibration correspondantes (15).

2. Système de configuration d'un calculateur (2) embarqué à bord d'un véhicule automobile selon la revendication 1, **caractérisé en ce que** les moyens d'écriture comprennent des moyens de verrouillage d'écriture après qu'un numéro d'identification valide a été écrit dans la zone de stockage (13).

3. Système de configuration d'un calculateur (2) embarqué à bord d'un véhicule automobile selon la revendication 1 ou 2, **caractérisé en ce que** les moyens d'écriture comprennent un premier outil (1) d'émission du numéro d'identification (VIN) vers la zone de stockage (13) du calculateur pour écrire celui-ci dans cette zone et un second outil (7) de relecture et de contrôle de la validité de ce numéro d'identification (VIN) écrit dans cette zone (13) du calculateur (2) pour émettre un ordre de verrouillage d'écriture dans cette zone de stockage (13).

4. Système de configuration d'un calculateur (2) embarqué à bord d'un véhicule automobile selon l'une quelconque des revendications précédentes, **caractérisé en ce qu'**il comporte des moyens d'allumage d'un voyant de défaut si un numéro d'identification n'est pas inscrit en mémoire et verrouillé.
